# FASCICULE DE BREVET EUROPEEN

(11) **EP 4 010 540 B1**
(45) Date de publication et mention de la délivrance du brevet: **19.11.2025**
(21) Numéro de dépôt: 20820250.7
(22) Date de dépôt: 03.08.2020
(51) Int. Cl.: E04B 1/78, E04C 1/41

(54) **PANNEAU D'ISOLATION THERMIQUE**
WÄRMEISOLIERPLATTE
THERMAL INSULATION PANEL

(30) Priorité: 05.08.2019 FR 1908951
(43) Date de publication de la demande: 15.06.2022
(73) Titulaire: Vicat, 38080 l'Isle-d'Abeau (FR)
(72) Inventeur: BARNES-DAVIN, Laury, 38500 VOIRON (FR); MONTAZEAUD, Benoit, 38200 VIENNE (FR)
(74) Mandataire: Germain Maureau
(86) Numéro de dépôt international: PCT/FR2020/051426
(87) Numéro de publication internationale: WO 2021/023942

(56) Documents cités:
- DE-A1- 102004 019 783
- DE-A1- 102016 120 947
- US-A1- 2012 148 806

## Description

La présente invention concerne un panneau d'isolation thermique, par exemple pour bâtiments.

Afin de diminuer sensiblement les déperditions thermiques d'un bâtiment, il est connu de réaliser soit une isolation thermique par l'extérieur (ITE) qui consiste à placer des panneaux d'isolation thermique et différentes couches de matériaux de parements, telles que par exemple des enduits minéraux ou organiques, du PVC, du bois, des panneaux bétons ou encore de la pierre, sur les murs extérieurs du bâtiment, soit une isolation thermique par l'intérieur (ITI) qui consiste notamment à placer des panneaux d'isolation thermique et différentes couches de matériaux de parements sur les murs intérieurs du bâtiment.

Les panneaux d'isolation thermique utilisés pour l'ITE et l'ITI peuvent par exemple être réalisés en polystyrène, en polyuréthane, en béton cellulaire ou encore en fibre de verre. De tels panneaux d'isolation thermique présentent toutefois de nombreux inconvénients.

En effet, les panneaux d'isolation thermique en polystyrène et en polyuréthane présentent une résistance au feu et une recyclabilité relativement faibles et ont un impact environnemental important, et les panneaux d'isolation thermique en fibre de verre présentent également une faible recyclabilité. En outre, les panneaux d'isolation thermique en béton cellulaire sont relativement difficiles à poser du fait de leur masse importante. Le document US 2012/148806 A1 divulgue les caractéristiques du préambule de la revendication 1.

La présente invention vise à remédier à tout ou partie de ces inconvénients.

Le problème technique à la base de l'invention consiste donc à fournir un panneau d'isolation thermique qui soit recyclable, qui présente une importante résistance au feu et qui puisse être aisément posé, tout en ayant un faible impact environnemental.

A cet effet, la présente invention concerne un panneau d'isolation thermique, par exemple pour bâtiments, comprenant les caractéristiques de la revendication 1.

Un telle configuration du panneau d'isolation thermique selon l'invention, et notamment le fait que la couche d'isolation thermique soit formée par une mousse cimentaire, confère au panneau d'isolation thermique une recyclabilité élevée, tout en réduisant sensiblement la masse de ce dernier par rapport à un panneau d'isolation thermique en béton cellulaire.

En outre, la présence de l'au moins un élément structurel de renforcement assure une résistance mécanique élevée au panneau d'isolation thermique, bien que ce dernier soit en majorité formé par une mousse cimentaire durcie.

Par conséquent, le panneau d'isolation thermique selon l'invention est hautement recyclable, présente une importante résistance au feu et peut être aisément posé, tout en ayant un faible impact environnemental et tout en présentant une résistance mécanique élevée.

Le panneau d'isolation thermique peut en outre présenter une ou plusieurs des caractéristiques suivantes, prises seules ou en combinaison.

Selon un mode de réalisation de l'invention, l'au moins un élément structurel de renforcement est au moins en partie intégré dans la mousse cimentaire.

Selon un mode de réalisation de l'invention, l'au moins un élément structurel de renforcement est intégralement intégré dans la mousse cimentaire.

Selon un mode de réalisation de l'invention, l'au moins un élément structurel de renforcement forme une face externe du panneau d'isolation thermique.

Selon un mode de réalisation de l'invention, l'au moins un élément structurel de renforcement comprend au moins une structure textile souple comportant des fils textiles.

Selon un mode de réalisation de l'invention, l'au moins une structure textile souple est une grille textile ou un tissu.

Selon un mode de réalisation de l'invention, les fils textiles de l'au moins une structure textile souple comportent des fils de verre, et par exemple des fils de verre alcali-résistant.

Selon un mode de réalisation de l'invention, les fils textiles de l'au moins une structure textile souple comportent des fils de chaîne et des fils de trame.

Selon un mode de réalisation de l'invention, les fils de chaîne et/ou les fils de trame de l'au moins une structure textile souple sont composés de fils de verre, et par exemple de fils de verre alcali-résistant.

Selon un mode de réalisation de l'invention, les fils de chaîne et/ou les fils de trame de l'au moins une structure textile souple sont composés de fils de silionne (marque déposée).

Selon un mode de réalisation de l'invention, les fils textiles, et par exemple les fils de chaîne et les fils de trame, de l'au moins une structure textile souple sont composés de fils de verre identiques.

Selon un mode de réalisation de l'invention, les fils textiles, et par exemple les fils de chaîne et les fils de trame, de l'au moins une structure textile souple présentent des titres identiques.

Selon un mode de réalisation de l'invention, chaque fil de chaîne de l'au moins une structure textile souple présente un titre différent de chaque fil de trame de l'au moins une structure textile souple.

Selon un mode de réalisation de l'invention, chaque fil de trame de l'au moins une structure textile souple présente un titre correspondant au double du titre de chaque fil de chaîne de l'au moins une structure textile souple.

Selon un mode de réalisation de l'invention, chaque fil de chaîne de l'au moins une structure textile souple présente un titre compris entre 50 et 300 tex. Chaque fil de chaîne peut par exemple présenter un titre de 68 tex, 136 tex ou encore 272 tex.

Selon un mode de réalisation de l'invention, chaque fil de trame de l'au moins une structure textile souple présente un titre compris entre 50 et 600 tex. Chaque fil de trame peut par exemple présenter un titre de 68 tex, 136 tex, 272 tex ou encore 544 tex.

Selon un mode de réalisation de l'invention, l'au moins une structure textile souple comporte un revêtement de liaison recouvrant et reliant les fils textiles, et par exemple les fils de chaîne et les fils de trame, de l'au moins une structure textile souple.

Selon un mode de réalisation de l'invention, les fils textiles, et par exemple les fils de chaîne et les fils de trame, de l'au moins une structure textile souple sont collés entre eux.

Selon un mode de réalisation de l'invention, le revêtement de liaison est en PVC ou en EVA
Selon un mode de réalisation de l'invention, les fils textiles, et par exemple les fils de chaîne et les fils de trame, de l'au moins une structure textile souple sont tissés ou non tissés.

Selon un mode de réalisation de l'invention, les fils textiles, et par exemple les fils de chaîne et les fils de trame, de l'au moins une structure textile souple sont superposés et collés entre eux.

Selon un autre mode de réalisation de l'invention, l'au moins une structure textile souple présente une contexture 2x2S, 1x0,5S, 1x1S, 5x3S ou encore 3x3D.

Selon une variante de réalisation de l'invention, l'au moins une structure textile souple est formée par un complexe textile multicouche. Le complexe textile multicouche comporte par exemple au moins une grille textile et un tissu.

Selon un mode de réalisation de l'invention, l'au moins une structure textile souple comporte au moins deux nappes de fils de chaîne entre lesquelles est interposée au moins une nappe de fils de trame, les fils de chaîne et les fils de trame étant liés entre eux à leurs croisements par le revêtement de liaison.

Selon un mode de réalisation de l'invention, l'au moins une structure textile souple a une épaisseur comprise entre 300 et 990 µm.

Selon un mode de réalisation de l'invention, l'au moins une structure textile souple présente une masse comprise entre 100 et 250 g/m².

Selon un mode de réalisation de l'invention, chaque fil textile de l'au moins une structure textile souple présente une résistance comprise entre 50 et 300 daN/5cm, et par exemple entre environ 90 et environ 250 daN/5cm.

Selon un mode de réalisation de l'invention, chaque fil de chaîne de l'au moins une structure textile souple présente une résistance comprise entre 50 et 300 daN/5cm, et par exemple entre environ 90 et environ 250 daN/5cm.

Selon un mode de réalisation de l'invention, chaque fil de trame de l'au moins une structure textile souple présente une résistance comprise entre 50 et 300 daN/5cm, et par exemple entre environ 90 et environ 250 daN/5cm.

Selon un mode de réalisation de l'invention, chaque fil textile de l'au moins une structure textile souple présente un allongement à la rupture compris entre 3,5 et 5,5%, et par exemple entre environ 4 et environ 5%.

Selon un mode de réalisation de l'invention, chaque fil de chaîne de l'au moins une structure textile souple présente un allongement à la rupture compris entre 3,5 et 5,5%, et par exemple entre environ 4 et environ 5%.

Selon un mode de réalisation de l'invention, chaque fil de trame de l'au moins une structure textile souple présente un allongement à la rupture compris entre 3,5 et 5,5%, et par exemple entre environ 4 et environ 5%.

Selon un mode de réalisation de l'invention, les fils textiles de l'au moins une structure textile souple définissent des espaces ajourés, également nommés mailles, et par exemple un réseau d'espaces ajourés.

Selon un mode de réalisation de l'invention, les espaces ajourés définis par les fils textiles sont polygonales, et par exemple rectangulaires ou carrées.

Selon un mode de réalisation de l'invention, les espaces ajourés définis par les fils textiles sont carrés et ont au moins 3 millimètres de côté, et par exemple environ cinq millimètres de côté.

Selon un mode de réalisation de l'invention, les fils textiles de l'au moins une structure textile souple sont entrecroisés de manière à définir les espaces ajourés.

Selon un mode de réalisation de l'invention, les fils de chaîne et les fils de trame de l'au moins une structure textile souple définissent des espaces ajourés d'au moins 3 millimètres de côté, et par exemple d'environ cinq millimètres de côté.

Selon un mode de réalisation de l'invention, l'au moins un élément structurel de renforcement comporte une pluralité d'éléments structurels de renforcement qui sont solidaires de la couche d'isolation thermique, chaque élément structurel de renforcement étant ajouré et souple. Chaque élément structurel de renforcement peut par exemple être constitué uniquement d'une structure textile souple comportant des fils textiles.

Selon un mode de réalisation de l'invention, la mousse cimentaire présente une conductivité thermique comprise entre 0,02 et 0.06 W/m.K, et par exemple comprise entre 0,03 et 0.06 W/m.K, et avantageusement comprise entre 0,035 et 0,055 W/m.K.

Selon un mode de réalisation de l'invention, la mousse cimentaire présente une masse volumique comprise entre 50 et 200 Kg/m³.

Selon un mode de réalisation de l'invention, la mousse cimentaire présente une masse volumique sèche comprise entre 80 et 150 Kg/m³.

Selon un mode de réalisation de l'invention, la composition cimentaire comprend en outre au moins un agent réducteur d'eau. Toutefois, selon une variante de réalisation de l'invention, la composition cimentaire pourrait être dépourvue d'agent réducteur d'eau.

Selon un mode de réalisation de l'invention, la composition cimentaire comprend entre 0,10 et 0,3 % d'extrait sec d'agent réducteur d'eau par rapport au poids de liant hydraulique.

Selon un mode de réalisation de l'invention, l'agent réducteur d'eau est un plastifiant ou un superplastifiant.

Selon un mode de réalisation de l'invention, l'agent réducteur d'eau est choisi parmi les lignosulfonates, les acides hydro carboxyliques, les carbohydrates ou d'autres composés organiques, tels que le glycérol, l'alcool polyvinylique, le sodium alumino-methyl-silicaonate, l'acide sulfanilique, la caséine et/ou le PCP.

Selon un mode de réalisation de l'invention, les fibres peuvent être des fibres naturelles, cellulosiques, polymériques, organiques et/ou inorganiques. Dans le cas d'une utilisation de fibres de verre, celles-ci doivent présenter une résistance aux alcalins suffisantes.

Au sens de la présente invention, le terme « mousse aqueuse » définit tout type de mousse obtenue par un mélange de bulles de gaz dans une solution aqueuse. Une telle solution aqueuse comprend de l'eau et au moins un composé tensioactif. De façon avantageuse, les bulles de gaz présentent des diamètres inférieurs à 1 mm. De façon avantageuse, la solution aqueuse est un mélange d'eau et d'au moins un agent moussant. Un tel mélange peut être réalisé en continu ou par lot.

Selon un mode de réalisation de l'invention, la mousse aqueuse est obtenue à l'aide d'un générateur de mousse, et plus particulièrement en introduisant la solution aqueuse et un gaz sous pression dans le générateur de mousse. Selon un tel mode de réalisation, la solution aqueuse est obtenue en mélangeant l'eau et l'au moins un agent moussant préalablement à leur introduction dans le générateur de mousse.

Selon un mode de réalisation de l'invention, le générateur de mousse est configuré de telle sorte que la mousse aqueuse obtenue est stable et les bulles de gaz de la mousse aqueuse présentent des diamètres inférieurs à 1 mm.

Selon un mode de réalisation de l'invention, le générateur de mousse comporte un corps de base, par exemple cylindrique, à travers lequel sont destinés à s'écouler la solution aqueuse et le gaz sous pression, et des inserts disposés dans le corps de base et au contact desquels la solution aqueuse et le gaz sous pression sont destinés à s'écouler. Les inserts peuvent par exemple comporter des pièces métalliques creuses ou pleine (par exemple des écrous ou des œillets...), des fibres métalliques, des fibres plastiques, des billes de verres, etc.

Selon un mode de réalisation de l'invention, l'agent moussant est un agent moussant organique. De façon avantageuse, l'agent moussant est protéinique d'origine animale ou végétale. L'agent moussant peut également être un tensioactif cationique, ionique, non ionique et/ou amphotère.

Selon un mode de réalisation de l'invention, le liant hydraulique comporte au moins un ciment choisi parmi un ciment Portland, un ciment alumineux, un ciment sulfoalumineux et/ou un ciment naturel prompt. Le liant hydraulique peut comporter en outre au moins un additif minéral, tel que de la silice, du carbonate de calcium, des argiles calcinées, de la fumée de silice, du laitier, des cendres volantes ou des pouzzolanes. Le liant hydraulique peut par exemple comporter plusieurs additifs minéraux, et notamment plusieurs additifs minéraux parmi ceux précités. De façon avantageuse, le liant hydraulique comprend 0 à 20 % d'additifs minéraux par rapport au poids de ciment.

Selon un mode de réalisation de l'invention, la composition cimentaire comporte au moins un adjuvant choisi parmi un agent rhéologique, un agent rétenteur d'eau, un agent entraîneur d'air, un agent épaississant, un agent de protection biocide et/ou fongicide, un agent hydrofugeant, un agent dispersant, un accélérateur de prise, un retardateur de prise, un stabilisateur, tel qu'un stabilisateur de bulles de gaz, et un agent de prise et/ou de durcissement de la composition cimentaire. Le stabilisateur est plus particulièrement configuré pour modifier la tension superficielle des bulles de gaz de la mousse aqueuse afin d'améliorer la taille des bulles de gaz et/ou d'augmenter la stabilité des bulles de gaz.

Selon un mode de réalisation de l'invention, l'au moins un adjuvant comporte un accélérateur de prise et/ou un stabilisateur de bulles de gaz.

Selon un mode de réalisation de l'invention, la composition cimentaire comporte des fibres choisies parmi des fibres améliorant les propriétés rhéologiques de la composition cimentaire et/ou des fibres améliorant les propriétés mécaniques, telles que la robustesse, de la composition cimentaire.

Selon un mode de réalisation de l'invention, l'au moins un élément structurel de renforcement présente une forme tridimensionnelle.

Selon un mode de réalisation de l'invention, l'au moins un élément structurel de renforcement présente une forme bidimensionnelle.

Selon un mode de réalisation de l'invention, le panneau d'isolation thermique a une forme globalement rectangulaire.

Selon un mode de réalisation de l'invention, le panneau d'isolation thermique présente une épaisseur inférieure ou égale à 0,4 m.

Selon un mode de réalisation de l'invention, le panneau d'isolation thermique présente une largeur inférieure ou égale à 0,6 m.

Selon un mode de réalisation de l'invention, le panneau d'isolation thermique présente une longueur inférieure ou égale à 1,2 m.

Selon un mode de réalisation de l'invention, l'au moins un élément structurel de renforcement comporte un premier élément structurel de renforcement formant une première face externe du panneau d'isolation thermique et un deuxième élément structurel de renforcement formant une deuxième face externe du panneau d'isolation thermique, les premier et deuxième éléments structurels de renforcement étant disposés de part et d'autre de la couche d'isolation thermique. De façon avantageuse, les premier et deuxième éléments structurels de renforcement sont distincts l'un de l'autre et espacés l'un de l'autre.

Selon un mode de réalisation de l'invention, l'au moins un élément structurel de renforcement comporte en outre un élément structurel de renforcement intermédiaire intégré dans la mousse cimentaire et disposé entre les premier et deuxième éléments structurels de renforcement.

Selon un mode de réalisation de l'invention, le panneau d'isolation thermique a une forme globalement parallélépipédique.

Selon un mode de réalisation de l'invention, le panneau d'isolation thermique est un panneau d'isolation thermique externe destiné à être fixé sur une paroi externe d'un bâtiment.

Selon un autre mode de réalisation de l'invention, le panneau d'isolation thermique est un panneau d'isolation thermique interne destiné à être fixé sur une paroi interne d'un bâtiment.

Selon un mode de réalisation de l'invention, la composition cimentaire est préparée au moins en partie en mélangeant la mousse aqueuse et un coulis cimentaire, le coulis cimentaire comprenant au moins de l'eau et le liant hydraulique. Le mélange de la mousse aqueuse et du coulis cimentaire peut être effectué par lot ou en continue.

Selon un mode de réalisation de l'invention, le coulis cimentaire est préparé à l'aide d'un malaxeur, et par exemple à l'aide d'un malaxeur à fort cisaillement, tel qu'un turbo-malaxeur ou un malaxeur pour coulis d'injection.

Selon un mode de réalisation de l'invention, le coulis cimentaire est préparé en introduisant de l'eau ainsi que des éventuels adjuvants, réducteurs d'eau et/ou fibres dans le malaxeur, en homogénéisant ces composants dans le malaxeur, et ensuite en introduisant progressivement le liant hydraulique dans le malaxeur fonctionnant à pleine puissance. Le mélange de ces différents composants peut ensuite être poursuivi durant 2 à 3 minutes.

Selon un mode de réalisation de l'invention, l'au moins un adjuvant est intégré dans la composition cimentaire durant la préparation du coulis cimentaire, durant la production de la mousse aqueuse, durant le mélange de la mousse aqueuse et du coulis cimentaire ou après le mélange de la mousse aqueuse et du coulis cimentaire.

Selon un mode de réalisation de l'invention, le panneau d'isolation thermique comporte en outre une structure de renforcement qui est solidaire de la couche d'isolation thermique et qui est souple et non ajourée. La structure de renforcement peut par exemple former une face externe du panneau d'isolation thermique.

Selon un mode de réalisation de l'invention, la structure de renforcement est une structure textile qui est souple et non ajourée. Une telle structure textile peut par exemple être un tissu de verre, du feutre, un tissu roving, un tissu rovimat, un mat de verre (par exemple ayant un poids compris entre 300 et 600 g/m²), un tissu multiaxial, du galon de verre, un tissu en laine de verre.

Selon un mode de réalisation de l'invention, l'au moins un élément structurel de renforcement comporte un élément structurel de renforcement qui est souple et ajourée et qui forme une première face externe du panneau d'isolation thermique, et la structure de renforcement forme une deuxième face externe du panneau d'isolation thermique.

Selon un mode de réalisation de l'invention, la mousse cimentaire présente une porosité comprise entre 90 et 98%.

Selon un mode de réalisation de l'invention, la mousse cimentaire présente une résistance à la traction supérieure à 10 KPa.

Selon un mode de réalisation de l'invention, la mousse cimentaire présente une résistance à la flexion supérieure à 10 KPa.

Selon un mode de réalisation de l'invention, la mousse cimentaire présente une résistance à la compression comprise entre 0,05 et 0,5 Mpa.

Selon un mode de réalisation de l'invention, la mousse cimentaire présente une absorption de l'humidité inférieure à 20 %.

Selon un mode de réalisation de l'invention, la mousse cimentaire a une résistance au gel conforme à la norme NF EN 771-3+A/CN.

Selon un mode de réalisation de l'invention, la mousse cimentaire a une réaction au feu A1.

Selon un mode de réalisation de l'invention, la mousse cimentaire a un coefficient de transmission de la vapeur d'eau inférieure à 3 g.h⁻¹.m⁻².

Selon un mode de réalisation de l'invention, l'au moins un élément structurel de renforcement présente un taux d'ajourage, également nommé taux de perforation, compris entre 25 à 80 %. En d'autres termes, la surface des espaces ajourés de l'au moins un élément structurel de renforcement représente 25 à 80 % de la surface totale de l'au moins un élément structurel de renforcement.

De toute façon l'invention sera bien comprise à l'aide de la description qui suit en référence aux dessins schématiques annexés représentant, à titre d'exemple non limitatif, une forme d'exécution de ce panneau d'isolation thermique.
[Fig 1] est une vue en perspective d'un panneau d'isolation thermique selon l'invention.
[Fig 2] est une vue de face du panneau d'isolation thermique de la figure 1.
[Fig 3] est une vue partielle en coupe longitudinale du panneau d'isolation thermique de la figure 1.
[Fig 4] est une vue en perspective d'un élément structurel de renforcement du panneau d'isolation thermique de la figure 1.
[Fig 5] est un diagramme montrant l'évolution de la force appliquée sur un corps d'épreuve en fonction de la déformation de ce dernier.

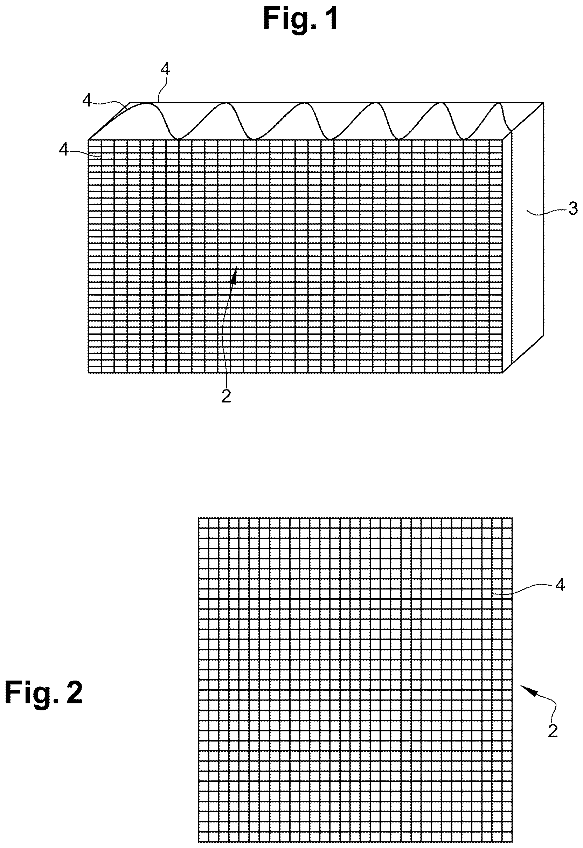

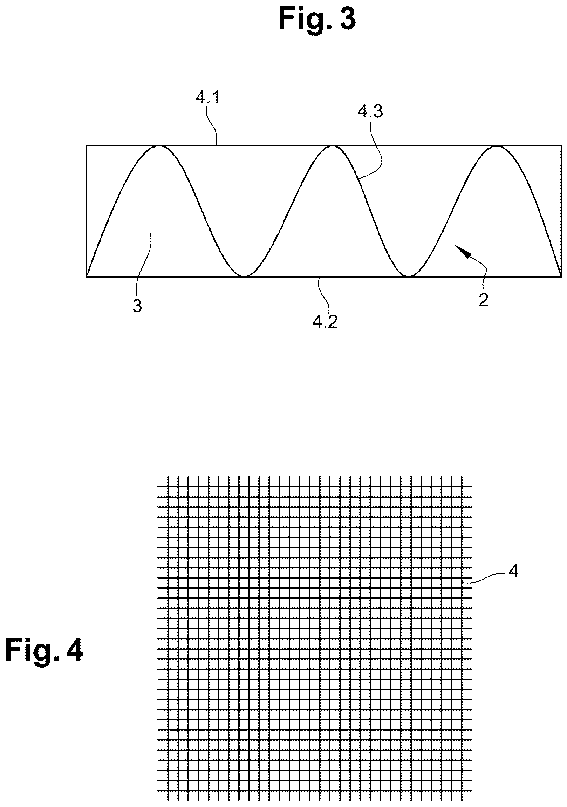

Les figures 1 à 3 représentent un panneau d'isolation thermique 2 adapté pour réaliser une isolation thermique par l'extérieur (ITE) d'un bâtiment, tel que par exemple une habitation individuelle, une habitation collective, un immeuble de bureaux, un bâtiment agricole ou semi-agricole. Le panneau d'isolation thermique 2 peut être utilisé aussi bien pour réaliser une isolation d'un bâtiment neuf ou pour la rénovation d'un bâtiment ancien.

Le panneau d'isolation thermique 2 a avantageusement une forme globalement rectangulaire. Le panneau d'isolation thermique 2 peut par exemple présenter une épaisseur inférieure ou égale à 0,4 m, une largeur inférieure ou égale à 0,6 m, et une longueur inférieure ou égale à 1,2 m.

Le panneau d'isolation thermique 2 comprend une couche d'isolation thermique 3 formée par une mousse cimentaire durcie. La mousse cimentaire présente avantageusement une conductivité thermique comprise entre 0,03 et 0.06 W/m.K, et une masse volumique comprise entre 50 et 200 Kg/m³.

La mousse cimentaire est formée par un durcissement d'une composition cimentaire comprenant un liant hydraulique, au moins un adjuvant, de l'eau, des fibres et une mousse aqueuse.

Le liant hydraulique comporte de préférence au moins un ciment choisi parmi un ciment Portland, un ciment alumineux, un ciment sulfoalumineux et/ou un ciment naturel prompt, et la mousse aqueuse est avantageusement obtenue par un mélange de bulles de gaz dans une solution aqueuse qui comporte par exemple de l'eau et au moins un composé tensioactif.

Selon un mode de réalisation de l'invention, la composition cimentaire comprend au moins un adjuvant choisi parmi un agent rhéologique, un agent rétenteur d'eau, un agent entraîneur d'air, un agent épaississant, un agent de protection biocide et/ou fongicide, un agent hydrofugeant, un agent dispersant, un accélérateur, un retardateur et un agent de prise et/ou de durcissement de la composition cimentaire, et les fibres sont choisies parmi des fibres améliorant les propriétés rhéologiques de la composition cimentaire et/ou des fibres améliorant les propriétés mécaniques de la composition cimentaire, et par exemple des fibres de verre.

Le panneau d'isolation thermique 2 comprend en outre plusieurs éléments structurels de renforcement 4 qui sont solidaires de la couche d'isolation thermique 3.

Selon le mode de réalisation représenté sur les figures, le panneau d'isolation thermique 2 comprend un premier élément structurel de renforcement 4.1 formant une première face externe du panneau d'isolation thermique 2 et un deuxième élément structurel de renforcement 4.2 formant une deuxième face externe du panneau d'isolation thermique 2. Ainsi, les premier et deuxième éléments structurels de renforcement 4.1, 4.2 sont disposés de part et d'autre de la couche d'isolation thermique 3, et présentent chacun une forme bidimensionnelle.

Le panneau d'isolation thermique 2 comporte en outre un élément structurel de renforcement intermédiaire 4.3 intégré, et de préférence intégralement intégré, dans la mousse cimentaire et donc disposé entre les premier et deuxième éléments structurels de renforcement 4.1, 4.2. De façon avantageuse, l'élément structurel de renforcement intermédiaire 4.3 présente une forme tridimensionnelle, et peut par exemple présenter une pluralité d'ondulations qui peuvent être concaves et/ou convexes.

Chaque élément structurel de renforcement 4 comprend plus particulièrement une structure textile souple comportant des fils textiles qui peuvent être tissés ou simplement superposés et collés entre eux. Chaque structure textile souple peut par exemple présenter une épaisseur comprise entre 300 et 990 µm, et une masse comprise entre 100 et 250 g/m².

Chaque structure textile souple peut par exemple être formée par une grille textile ou par un tissu. Toutefois, selon une variante de réalisation de l'invention, chaque structure textile souple pourrait être formée par un complexe textile multicouche qui pourrait par exemple comporter au moins une grille textile et un tissu.

Selon un mode de réalisation de l'invention, les fils textiles de chaque structure textile souple comportent des fils de chaîne et des fils de trame, et les fils de chaîne et les fils de trame de chaque structure textile souple sont composés de fils de verre, et par exemple de fils de silionne (marque déposée). Les fils de chaîne et les fils de trame de chaque structure textile souple peuvent être composés de fils de verre identiques, c'est-à-dire réalisés dans le même matériau et ayant des titres identiques. Les fils de chaîne et les fils de trame de chaque structure textile souple peuvent notamment présenter un titre de 68 tex.

Selon un autre mode de réalisation de l'invention, chaque fil de chaîne d'une structure textile souple peut présenter un titre différent de chaque fil de trame de ladite structure textile souple. Ainsi, chaque fil de trame d'une structure textile souple peut par exemple présenter un titre correspondant au double du titre de chaque fil de chaîne de ladite structure textile souple. Chaque structure textile souple peut notamment être formée de fils de chaîne ayant un titre de 68 tex et de fils de trame ayant un titre de 136 tex, ou de fils de chaîne ayant un titre de 136 tex et de fils de trame ayant un titre de 272 tex ou encore de fils de chaîne ayant un titre de 272 tex et de fils de trame ayant un titre de 544 tex.

Avantageusement, chaque structure textile souple comporte en outre un revêtement de liaison recouvrant et reliant les fils textiles, et par exemple les fils de chaîne et les fils de trame, de ladite structure textile souple. Le revêtement de liaison de chaque structure textile souple est plus particulièrement configuré pour collés entre eux les fils de chaîne et les fils de trame respectifs. Le revêtement de liaison de chaque structure textile souple peut par exemple être en PVC ou en EVA.

Selon un mode de réalisation de l'invention, chaque fil de chaîne de chaque structure textile souple présente une résistance comprise entre 90 et 250 daN/5cm, et chaque fil de trame de chaque structure textile souple présente une résistance comprise entre 90 et 250 daN/5cm.

Selon un mode de réalisation de l'invention, chaque fil de chaîne de chaque structure textile souple présente un allongement à la rupture compris environ 4 et 5%, et chaque fil de trame de chaque structure textile souple présente également un allongement à la rupture compris entre 4 et 5%.

Le tableau reproduit ci-dessous indique différentes caractéristiques de cinq structures textiles souples différentes pouvant être utilisées pour former les différents éléments structurels de renforcement 4.

**[Tableau 1]**

| Contexture | Fil de chaîne | Fil de trame | Poids (g/^{m2}) | Epaisseur (µm) | Revêtement de liaison | Résistance (DaN/5cm) | | Allongement (%) | |
|---|---|---|---|---|---|---|---|---|---|
| | | | | | | Fil de chaîne | Fil de trame | Fil de chaîne | Fil de trame |
| 2 x 2 S | Silionne 136 tex | Silionne 272 tex | 205 | 600 | PVC | 240 | 240 | 5 | 5 |
| 1 x 0,5 S | Silionne 272 tex | Silionne 544 tex | 195 | 850 | PVC | 220 | 145 | 4,5 | 4,5 |
| 1 x 1 S | Silionne 272 tex | Silionne 544 tex | 225 | 850 | PVC | 240 | 250 | 5 | 5,2 |
| 5 x 3 S | Silionne 68 tex | Silionne 136 tex | 135 | 350 | PVC | 150 | 170 | 4,5 | 4,5 |
| 3 x 3 D | Silionne 68 tex | Silionne 68 tex | 115 | 570 | EVA | 90 | 90 | 4 | 4 |

Les différents fils de silionne (marque déposée) mentionnés dans le tableau reproduit ci-dessus sont avantageusement réalisés en verre E.

Selon un autre mode de réalisation de l'invention, chaque structure textile souple peut comporter au moins deux nappes de fils de chaîne entre lesquelles est interposée au moins une nappe de fils de trame, les fils de chaîne et les fils de trame étant liés entre eux à leurs croisements par le revêtement de liaison correspondant.

Le panneau d'isolation thermique 2 selon la présente invention peut être fixé à un mur de différentes manières, et par exemple selon une pose collé et calée-chevillée. Après fixation du panneau d'isolation thermique 2, ce dernier est avantageusement recouvert par un revêtement de finition, telle qu'une couche d'enduit qui est déposée sur la face externe visible du panneau d'isolation thermique 2. Le revêtement de finition peut également être fixé au mur de manière à recouvrir le panneau d'isolation thermique 2 et à former une façade ventilée.

### Exemple 1 : composition de la mousse cimentaire

La couche d'isolation thermique 3 peut par exemple être formée par une mousse cimentaire composée d'un liant hydraulique à hauteur de 200kg/m³, d'un adjuvant à hauteur de 5 kg/m³, d'eau à hauteur de 100kg/m³, d'un agent moussant à hauteur de 2,5kg/m³ et de mousse aqueuse à hauteur de 830 l/m³. Après durcissement, la mousse cimentaire présente une masse volumique de 240 kg/m³.

### Exemple 2 : incorporation d'une structure textile souple dans la mousse cimentaire.

### Confection de deux corps d'épreuve :

Un premier corps d'épreuve (CE1) est confectionné à partir d'une mousse cimentaire telle que décrite dans l'exemple 1 sans incorporation d'une structure textile souple dans la mousse cimentaire. Un second corps d'épreuve (CE2) est confectionné en intégrant une grille textile souple de contexture 2x2S à mihauteur dans une mousse cimentaire telle que décrite dans l'exemple 1 avant durcissement de ladite mousse cimentaire. Les premier et second corps d'épreuve présentent les mêmes dimensions à savoir : 60x60x10 cm.

### Caractérisation mécanique :

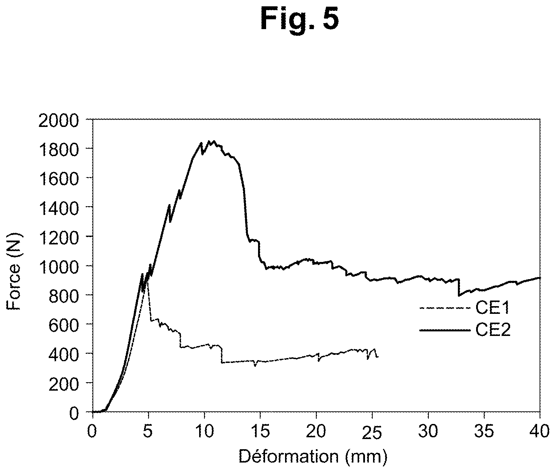

Après 28 jours de cure, les premier et second corps d'épreuve sont caractérisés en poinçonnement en utilisant une surface d'appui de 15x15 cm. Pour l'essai, les premier et second corps d'épreuve sont déposés sur un cadre de 50 x 50 cm. Les résultats obtenus sont reportés sur la figure 5.

Comme cela ressort de la figure 5, l'intégration d'une structure textile souple dans la mousse cimentaire a permis l'augmentation des propriétés mécaniques de la mousse cimentaire durcie. En particulier, la force maximum a été multipliée par deux tout comme la capité de reprise due à la structure textile souple.

### Exemple 3 : compositions complémentaires

Il est possible d'étendre l'intégration de structure textile souple à d'autres compositions de mousse cimentaire telles que :
- une mousse cimentaire composée d'un liant hydraulique à hauteur de 110kg/m³, d'adjuvant à hauteur de 5 kg/m³, d'eau à hauteur de 65kg/m³, d'un agent moussant à hauteur de 2,5kg/m³ et de mousse aqueuse à hauteur de 900 l/m³. Après durcissement la mousse cimentaire présente une masse volumique de 130 kg/m³ ;
- une mousse cimentaire composée d'un liant hydraulique à hauteur de 50kg/m³, d'adjuvant à hauteur de 5-20 kg/m³, d'eau à hauteur de 25kg/m³, d'un agent moussant à hauteur de 2,5kg/m³ et de mousse aqueuse à hauteur de 900 l/m³. Après durcissement la mousse cimentaire présente une masse volumique de 70 kg/m³ ;
- une mousse cimentaire composée d'un liant hydraulique à hauteur de 110kg/m³, d'adjuvant à hauteur de 5 kg/m³, d'eau à hauteur de 55kg/m³, d'un agent moussant à hauteur de 2,5kg/m³ et de mousse aqueuse à hauteur de 900 l/m³. Après durcissement la mousse cimentaire présente une masse volumique de 130 kg/m³ ;
- une mousse cimentaire composée d'un liant hydraulique à hauteur de 50kg/m³, d'adjuvant liquide (avec un extrait sec de 30%) à hauteur de 5-8 kg/m³, d'eau à hauteur de 25kg/m³, d'un agent moussant à hauteur de 2,5kg/m³ et de mousse aqueuse à hauteur de 900 l/m³. Après durcissement la mousse cimentaire présente une masse volumique de 70 kg/m³.

### Exemple 4 : composition complémentaire

Il est possible d'étendre l'intégration de structure textile souple à une mousse cimentaire composée d'un liant hydraulique à hauteur de 60 kg/m³, d'adjuvant stabilisateur, sous forme aqueuse, à hauteur de 1kg/m³ (à savoir 0,3 kg/m³ d'extrait sec d'adjuvant stabilisateur), d'eau à hauteur de 18kg/m³, d'agent réducteur d'eau, sous forme aqueuse, à hauteur de 0,3kg/m³ (à savoir 0,1 kg/m³ d'extrait sec d'agent réducteur d'eau), d'agent moussant à hauteur de 1,1kg/m³, et de mousse aqueuse à hauteur de 50kg/m³.

Comme il va de soi, l'invention ne se limite pas à la seule forme d'exécution de ce panneau d'isolation thermique, décrite ci-dessus à titre d'exemple, elle en embrasse au contraire toutes les variantes de réalisation dans la mesure où elles sont limitées par la portée des revendications annexées. C'est ainsi notamment que le panneau d'isolation thermique selon l'invention pourrait être également utilisé pour réaliser une isolation thermique par l'intérieur (ITI).

## Revendications

1. Panneau d'isolation thermique (2) comprenant une couche d'isolation thermique (3) formée par une mousse cimentaire durcie ; et au moins un élément structurel de renforcement (4) qui est solidaire de la couche d'isolation thermique (3), l'au moins un élément structurel de renforcement (4) étant ajouré et souple, le panneau d'isolation thermique étant **caractérisé en ce que** la mousse cimentaire étant obtenue par durcissement d'une composition cimentaire comprenant, pour 1 m³ de composition cimentaire, 50 à 130 kg de liant hydraulique, 0,1 à 5% d'extrait sec d'adjuvant par rapport au poids de liant hydraulique, 0 à 2 kg de fibres, 25 à 50% d'eau par rapport au poids de liant hydraulique, 0 à 0,3 % d'extrait sec d'agent réducteur d'eau par rapport au poids de liant hydraulique et le reste de mousse aqueuse, la mousse aqueuse étant composée en volume de 92 à 97 % de gaz et de 3 à 8 % d'une solution aqueuse qui comporte de l'eau et au moins un composé tensioactif.

2. Panneau d'isolation thermique (2) selon la revendication 1, dans lequel l'au moins un élément structurel de renforcement (4) est au moins en partie intégré dans la mousse cimentaire.

3. Panneau d'isolation thermique (2) selon la revendication 1 ou 2, dans lequel l'au moins un élément structurel de renforcement (4) est intégralement intégré dans la mousse cimentaire.

4. Panneau d'isolation thermique (2) selon la revendication 1 ou 2, dans lequel l'au moins un élément structurel de renforcement (4) forme une face externe du panneau d'isolation thermique (2).

5. Panneau d'isolation thermique (2) selon l'une quelconque des revendications 1 à 4, dans lequel l'au moins un élément structurel de renforcement (4) comprend au moins une structure textile souple comportant des fils textiles.

6. Panneau d'isolation thermique (2) selon la revendication 5, dans lequel l'au moins une structure textile souple est une grille textile ou un tissu.

7. Panneau d'isolation thermique (2) selon la revendication 5 ou 6, dans lequel les fils textiles de l'au moins une structure textile souple comportent des fils de verre.

8. Panneau d'isolation thermique (2) selon l'une quelconque des revendications 5 à 7, dans lequel l'au moins une structure textile souple comporte un revêtement de liaison recouvrant et reliant les fils textiles de l'au moins une structure textile souple.

9. Panneau d'isolation thermique (2) selon l'une quelconque des revendications 5 à 8, dans lequel les fils textiles de l'au moins une structure textile souple sont tissés.

10. Panneau d'isolation thermique (2) selon l'une quelconque des revendications 1 à 9, dans lequel la mousse cimentaire présente une conductivité thermique comprise entre 0,02 et 0.06 W/m.K.

11. Panneau d'isolation thermique (2) selon l'une quelconque des revendications 1 à 10, dans lequel la mousse cimentaire présente une masse volumique comprise entre 50 et 200 Kg/m³.

12. Panneau d'isolation thermique (2) selon l'une quelconque des revendication 1 à 11, dans lequel le liant hydraulique comporte au moins un ciment choisi parmi un ciment Portland, un ciment alumineux, un ciment sulfoalumineux et/ou un ciment naturel prompt.

13. Panneau d'isolation thermique (2) selon l'une quelconque des revendications 1 à 12, dans lequel l'au moins un élément structurel de renforcement comporte un premier élément structurel de renforcement (4.1) formant une première face externe du panneau d'isolation thermique (2) et un deuxième élément structurel de renforcement (4.2) formant une deuxième face externe du panneau d'isolation thermique (2), les premier et deuxième éléments structurels de renforcement (4.1, 4.2) étant disposés de part et d'autre de la couche d'isolation thermique (3).

14. Panneau d'isolation thermique (2) selon la revendication 13, dans lequel l'au moins un élément structurel de renforcement comporte en outre un élément structurel de renforcement intermédiaire (4.3) intégré dans la mousse cimentaire et disposé entre les premier et deuxième éléments structurels de renforcement (4.1, 4.2).

15. Panneau d'isolation thermique (2) selon l'une quelconque des revendications 1 à 14, dans lequel la composition cimentaire comprend en outre au moins un agent réducteur d'eau.

## Patentansprüche

1. Wärmedämmplatte (2), die eine Wärmedämmschicht (3) aus ausgehärtetem Zementschaum umfasst; und mindestens ein strukturelles Verstärkungselement (4), das fest mit der Wärmedämmschicht (3) verbunden ist, wobei das mindestens eine strukturelle Verstärkungselement (4) durchbrochen und weich ist, wobei die Wärmedämmplatte **dadurch gekennzeichnet ist, dass** der Zementschaum durch Aushärten einer Zementzusammensetzung erhalten wird, die für 1 m³ Zementzusammensetzung 50 bis 130 kg hydraulisches Bindemittel, 0,1 bis 5 % Trockenextrakt des Additivs bezogen auf das Gewicht des hydraulischen Bindemittels, 0 bis 2 kg Fasern, 25 bis 50 % Wasser bezogen auf das Gewicht des hydraulischen Bindemittels, 0 bis 0,3 % Trockenextrakt eines Wasserreduktionsmittels bezogen auf das Gewicht des hydraulischen Bindemittels und den Rest des wässrigen Schaums umfasst, wobei der wässrige Schaum zu 92 bis 97 % Gas und zu 3 bis 8 % aus einer wässrigen Lösung besteht, die Wasser und mindestens eine tensidische Verbindung aufweist.

2. Wärmedämmplatte (2) nach Anspruch 1, wobei das mindestens eine strukturelle Verstärkungselement (4) mindestens teilweise in den Zementschaum integriert ist.

3. Wärmedämmplatte (2) nach Anspruch 1 oder 2, wobei das mindestens eine strukturelle Verstärkungselement (4) vollständig in den Zementschaum integriert ist.

4. Wärmedämmplatte (2) nach Anspruch 1 oder 2, wobei das mindestens eine strukturelle Verstärkungselement (4) eine Außenseite der Wärmedämmplatte (2) bildet.

5. Wärmedämmplatte (2) nach einem der Ansprüche 1 bis 4, wobei das mindestens eine strukturelle Verstärkungselement (4) mindestens eine weiche Textilstruktur mit Textilfäden umfasst.

6. Wärmedämmplatte (2) nach Anspruch 5, wobei die mindestens eine weiche Textilstruktur ein Textilgitter oder ein Gewebe ist.

7. Wärmedämmplatte (2) nach Anspruch 5 oder 6, wobei die Textildrähte der mindestens einen weichen Textilstruktur Glasdrähte aufweisen.

8. Wärmedämmplatte (2) nach einem der Ansprüche 5 bis 7, wobei die mindestens eine weiche Textilstruktur eine Verbindungsbeschichtung aufweist, die die Textilfäden der mindestens einen weichen Textilstruktur überdeckt und verbindet.

9. Wärmedämmplatte (2) nach einem der Ansprüche 5 bis 8, wobei die Textilfäden der mindestens einen weichen Textilstruktur gewebt sind.

10. Wärmedämmplatte (2) nach einem der Ansprüche 1 bis 9, wobei der Zementschaum eine Wärmeleitfähigkeit zwischen 0,02 und 0,06 W/m.K besitzt.

11. Wärmedämmplatte (2) nach einem der Ansprüche 1 bis 10, wobei der Zementschaum eine Dichte zwischen 50 und 200 kg/m³ besitzt.

12. Wärmedämmplatte (2) nach einem der Ansprüche 1 bis 11, wobei das hydraulische Bindemittel mindestens einen Zement aufweist, der aus einem Portland-Zement, einem Aluminiumzement, einem Sulfoaluminzement und/oder einem Naturschnellzement ausgewählt ist.

13. Wärmedämmplatte (2) nach einem der Ansprüche 1 bis 12, wobei das mindestens eine strukturelle Verstärkungselement ein erstes strukturelles Verstärkungselement (4.1) aufweist, das eine erste Außenseite der Wärmedämmplatte (2) bildet, und ein zweites strukturelles Verstärkungselement (4.2), das eine zweite Außenseite der Wärmedämmplatte (2) bildet, wobei das erste und das zweite strukturelle Verstärkungselement (4.1, 4.2) auf beiden Seiten der Wärmedämmschicht (3) angeordnet sind.

14. Wärmedämmplatte (2) nach Anspruch 13, wobei das mindestens eine strukturelle Verstärkungselement ferner ein in den Zementschaum integriertes und zwischen dem ersten und dem zweiten strukturellen Verstärkungselement (4.1, 4.2) angeordnetes strukturelles Zwischenverstärkungselement (4.3) aufweist.

15. Wärmedämmplatte (2) nach einem der Ansprüche 1 bis 14, wobei die Zementzusammensetzung ferner mindestens ein Wasserreduktionsmittel umfasst.

## Claims

1. A thermal insulation panel (2) comprising a thermal insulation layer (3) formed by a hardened cementitious foam; and at least one reinforcing structural element (4) which is secured to the thermal insulation layer (3), the at least one reinforcing structural element (4) being apertured and flexible, the cementitious foam being obtained by hardening of a cementitious composition comprising, for 1 m³ of cementitious composition, 50 to 130 kg of hydraulic binder, 0.1 to 5% of dry extract of adjuvant relative to the weight of hydraulic binder, 0 to 2 kg of fibers, 25 to 50% of water relative to the weight of hydraulic binder, 0 to 0.3% of dry extract of water-reducing agent relative to the weight of hydraulic binder and the remainder consisting of an aqueous foam, the aqueous foam being composed of 92 to 97% by volume of gas and of 3 to 8% of an aqueous solution comprising water and at least one surfactant compound.

2. The thermal insulation panel (2) according to claim 1, wherein the at least one reinforcing structural element (4) is at least partly integrated into the cementitious foam.

3. The thermal insulation panel (2) according to claim 1 or 2, wherein the at least one reinforcing structural element (4) is completely integrated into the cementitious foam.

4. The thermal insulation panel (2) according to claim 1 or 2, wherein the at least one reinforcing structural element (4) forms an outer face of the thermal insulation panel (2).

5. The thermal insulation panel (2) according to any one of claims 1 to 4, wherein the at least one reinforcing structural element (4) comprises at least one flexible textile structure including textile threads.

6. The thermal insulation panel (2) according to claim 5, wherein the at least one flexible textile structure is a textile mesh or a fabric.

7. The thermal insulation panel (2) according to claim 5 or 6, wherein the textile threads of the at least one flexible textile structure include glass threads.

8. The thermal insulation panel (2) according to any one of claims 5 to 7, wherein the at least one flexible textile structure includes a binding coating covering and connecting the textile threads of the at least one flexible textile structure.

9. The thermal insulation panel (2) according to any one of claims 5 to 8, wherein the textile threads of the at least one flexible textile structure are woven.

10. The thermal insulation panel (2) according to any one of claims 1 to 9, wherein the cementitious foam has a thermal conductivity comprised between 0.02 and 0.06 W/m.K.

11. The thermal insulation panel (2) according to any one of claims 1 to 10, wherein the cementitious foam has a volumetric mass comprised between 50 and 200 Kg/m³.

12. The thermal insulation panel (2) according to any one of claims 1 to 11, wherein the hydraulic binder includes at least one cement selected from a Portland cement, an aluminous cement, a sulphoaluminous cement and/or a quick-setting natural cement.

13. The thermal insulation panel (2) according to any one of claims 1 to 12, wherein the at least one reinforcing structural element includes a first reinforcing structural element (4.1) forming a first outer face of the thermal insulation panel (2) and a second reinforcing structural element (4.2) forming a second outer face of the thermal insulation panel (2), the first and second structural reinforcement elements (4.1, 4.2) being arranged on either side of the thermal insulation layer (3).

14. The thermal insulation panel (2) according to claim 13, wherein the at least one reinforcing structural element further includes an intermediate reinforcing structural element (4.3) integrated into the cementitious foam and arranged between the first and second reinforcing structural elements (4.1, 4.2).

15. The thermal insulation panel (2) according to any one of claims 1 to 14, wherein the cementitious composition further comprises at least one water-reducing agent.
